# EUROPÄISCHE PATENTSCHRIFT

(11) **EP 3 321 900 B1**
(45) Veröffentlichungstag und Bekanntmachung des Hinweises auf die Patenterteilung: **26.02.2025**
(21) Anmeldenummer: 17161642.8
(22) Anmeldetag: 17.03.2017
(51) Int. Cl.: G08B 7/06, G08B 5/00

(54) **BESTELLHINWEISVORRICHTUNG ZUR AUSGABE EINES ALARMSIGNALS BEI ENTWENDUNG UND ENSPRECHENDES VERFAHREN**
ORDER SIGNALLING DEVICE FOR ISSUING AN ALARM SIGNAL IN THE EVENT OF THEFT AND CORRESPONDING METHOD
DISPOSITIF D'INDICATION DE COMMANDE AVEC ÉMISSION D'UN SIGNAL D'ALARME EN CAS DE VOL ET PROCÉDÉ CORRESPONDANT

(30) Priorität: 15.11.2016 DE 202016106406 U
(43) Veröffentlichungstag der Anmeldung: 16.05.2018
(73) Patentinhaber: Ordercube GmbH, 85567 Grafing bei München (DE)
(72) Erfinder: SUSLOV, Igor, 85567 Grafing bei München (DE); PASTERNAK, Daniel, 85567 Grafing bei München (DE)
(74) Vertreter: MERH-IP Matias Erny Reichl Hoffmann Patentanwälte PartG mbB

(56) Entgegenhaltungen:
- WO-A1-2010/136973
- WO-A2-2009/143062
- DE-A1- 102004 001 210
- GB-A- 2 288 481
- US-A1- 2009 027 226
- US-A1- 2015 199 720
- US-B1- 6 366 196

## Beschreibung

### Technisches Gebiet

Die vorliegende Erfindung betrifft allgemein eine Bestellhinweisvorrichtung, worunter ein System zum Signalisieren eines Wunsches, bedient zu werden, an Bedienpersonal zur Verwendung insbesondere in Restaurants, Gasthäuser und dergleichen verstanden wird. Im Besonderen betrifft die vorliegende Erfindung eine Bestellhinweisvorrichtung mit verbesserter Sichtbarkeit.

### Stand der Technik

Kellner-Ruf-Systeme sind aus dem Stand der Technik unlängst in unterschiedlichen Ausführungsformen bekannt. Bekannte Systeme umfassen in der Regel eine von einem Gast an einem Tisch oder Tresen betätigbare und mit einem Sender ausgestattete Eingabeeinrichtung, wobei mittels des Senders ein Signal an mindestens eine Empfangsvorrichtung übermittelt wird, welches Informationen zu einem Bestellwunsch eines Gastes sowie gegebenenfalls weitere Informationen bereitstellt.

Durch die Nutzung derartiger Systeme wird einerseits dem Gast die Abgabe eines Bestellwunsches erleichtert, andererseits dem Servicepersonal erkennbar signalisiert, dass ein Bestellwunsch von einem bestimmten Gast bzw. bestimmten Tisch vorliegt.

Aus der DE1993861U ist ein Kellner-Rufsystem bekannt, welches eine optische Signaleinrichtung umfasst, mittels der es möglich ist, das Servicepersonal auf einen Gast aufmerksam zu machen. Dieses Kellner-Ruf-System ist mit einer Batterie ausgestattet, die es ermöglicht, das System auf einem Tisch oder dergleichen aufzustellen. Ferner ist aus der DE29509928U1 ein Kellner-Rufgerät bekannt, das aus einer Tischleuchte mit frei liegenden Leuchtkörpern besteht. Die Leuchtkörper können zur Signalgebung mittels eines zugeordneten Schalters eingeschaltet werden.

Der Nachteil der vorgestellten Kellner-Ruf-Systeme liegt sowohl darin, dass sie von der Handhabung und Übersicht für den Kellner als auch für den Gast nicht transparent und entsprechend verwirrend sind, als auch darin, dass Schnittstellen für Smartphones, Smartwatches oder Tablets fehlen. Ferner dienen die bisherigen Erfindungen aufgrund ihrer technischen Konzeption und Größe nicht als Kerzenersatz, was es schwer macht, die Systeme auf dem ohnehin bereits überfüllten Restauranttisch zu platzieren.

Ein weiteres Problem ist, dass die Sichtbarkeit eines solchen Kellner-Ruf-Systems bzw. einer Bestellhinweisvorrichtung wetter- und tageszeitabhängig variieren kann. Beispielsweise kann in heller Umgebung, z. B. tagsüber bei sonnigem Wetter, die Sichtbarkeit der Bestellhinweisvorrichtung schlechter sein als am Abend nach Sonnenuntergang, weil ein gleich helles Leuchten in heller Umgebung schlechter wahrgenommen wird als in dunkler Umgebung.

Ferner kann die Sichtbarkeit sehr lokal ortsabhängig variieren. Beispielsweise kann - bei gleichem Wetter und zu derselben Uhrzeit - eine Bestellhinweisvorrichtung in der Sonne schlechter sichtbar sein, als eine im Schatten.

Zudem besteht das Problem, dass die Systeme leicht gestohlen werden können. Eine verstärkte Sichtbarkeit im Falle einer Entwendung wäre wünschenswert.

Eine Bestellhinweisvorrichtung mit verbesserter Sichtbarkeit unter verschiedenen äußeren Umständen, insbesondere unter verschiedenen äußeren Lichtverhältnissen, an verschiedenen Orten oder unter verschiedenen Krafteinwirkungen (Beschleunigungen, Bewegungen) wäre wünschenswert.

Die US 2015/0199720 A1 zeigt ein System und ein Verfahren zum gezielten Bewerben und Anpreisen unter Verwendung von auf Tischen verwendbaren Anzeigevorrichtungen.

### Überblick der Erfindung

Der vorliegenden Erfindung liegt die Aufgabe zu Grunde, eine Bestellhinweisvorrichtung zu schaffen, welches die vorgenannten Probleme ausräumt. Insbesondere besteht die Aufgabe der Erfindung darin, den Bestellprozess innerhalb eines Restaurants oder dergleichen für Gäste und Servicepersonal zu erleichtern sowie zu optimieren. Gäste sollen sich nicht mehr um das Servicepersonal sorgen und nicht um dessen Aufmerksamkeit ringen. Das Servicepersonal soll darüber hinaus einen vollumfänglichen Überblick darüber bewahren können, welcher Gast wie lange darauf wartet, bedient zu werden.

Erfindungsgemäß wird die voranstehende Aufgabe gemäß Anspruch 1 gelöst. Vorteilhafte Ausgestaltungen und Weiterbildungen der erfindungsgemäßen Bestellhinweisvorrichtung sind in den abhängigen Unteransprüchen angegeben.

Erfindungsgemäß ist eine Bestellhinweisvorrichtung der eingangs genannten Art dadurch gekennzeichnet, dass die Eingabeeinrichtung mit einer Anzeigeeinrichtung derart in Wirkverbindung steht, dass die Anzeigeeinrichtung nach seiner Aktivierung durch die Eingabeeinrichtung den Betätigungsvorgang der Eingabeeinrichtung mittels eines optischen Signals signalisiert, wobei die optische Anzeigeeinrichtung nach seiner Aktivierung ein optisches Dauersignal ausgibt, welches deaktivierbar ist. In einer ganz besonders bevorzugten Ausführungsform der Erfindung wird eine Einrichtung zum Erfassen der Zeitdauer seit der letzten Aktivierung des optischen Dauersignals bereitgestellt. Durch diese Einrichtung lässt sich erfassen, wie lange ein Gast bereits auf das Servicepersonal wartet, wobei sich dieser Wartevorgang mittels der optischen Anzeigeeinrichtung darstellen lässt. Vorzugsweise ändert sich die Farbe des optischen Dauersignals in Abhängigkeit der Zeit. In besonders bevorzugten Ausgestaltungen kann der Betätigungsvorgang der Eingabeeinrichtung über keine Kommunikationsschnittstelle an ein Steuergerät übermittelt werden.

Es sind grundsätzlich unterschiedliche Ausführungen denkbar, durch die sich eine derartige Darstellung der Wartezeit realisieren lässt. So kann in einer ersten Ausführungsform bspw. die Lichtintensität des optischen Dauersignals zeitabhängig variiert werden. In einer zweiten Ausführungsform wird hierzu die Farbe des optischen Dauersignals und/oder in einer dritten Ausführungsform der Erfindung die Frequenz des optischen Dauersignals zeitabhängig variiert, wobei sich vorgenannte Ausführungen durchaus auch kombinieren lassen. Daneben sind natürlich weitere optische Signalvariationen denkbar.

Die Variation der Farbe, der Lichtintensität und/oder der Frequenz des optischen Dauersignals erfolgt hierbei vorteilhafterweise in zeitlichen Intervallen, so dass bspw. über eine vorbestimmte Zeitdauer zunächst eine leichte Lichtintensität besteht, welche sich nach wenigen Minuten in einer stärkere wandelt usw.

Vorgenannte Ausführungen sollen nachstehend anhand eines konkreten Ausführungsbeispiels näher erörtert werden.

Die Bestellhinweisvorrichtung, welches sich vorzugsweise als Kerzenersatz auf einem Restauranttisch befindet, ändert, sobald der Gast bedient werden möchte und auf den dafür vorgesehenen "Call-Knopf" getippt hat, seinen Modus von "Kerzenflackern" hin zu einem zeitlich und farblich individuell einstellbaren Farbintervall. Ein Farbübergang z.B. von Grün auf Rot gewährleistet dadurch, dass der Kellner auf einen Blick erkennen kann, wie lange, welcher Gast bereits darauf wartet, bedient zu werden. Das gleiche Prinzip findet auch beim "Pay-Knopf" Anwendung, wenn der Gast bezahlen möchte.

Des Weiteren soll es vorzugsweise möglich sein, dass der Kellner diese Information auch über eine vorzugsweise vorgesehene Software/App für Smartphone, Tablet und Smartwatch entnehmen kann und so einen zusätzlichen Überblick erhalten kann, selbst wenn die Bestellhinweisvorrichtung sich nicht in seinem Sichtfeld befindet.

Statistiken, welche durch die Bestellhinweisvorrichtung generiert und auf der App angezeigt werden, ermöglichen dem Gastronomen, den Personalbedarf sowohl kurzfristig als auch langfristig zu koordinieren.

Dem Gastronomen kann somit ferner eine entsprechende Schnittstelle zur Bestellhinweisvorrichtung die Möglichkeit zur Verfügung stellen, die Auslastung und den Stand der Dinge in seinem Betrieb auch von unterwegs im Auge zu kontrollieren.

Weiterhin kann die Variation der Farbe, der Lichtintensität und/oder der Frequenz des optischen Dauersignals von einem Betriebszustand der Bestellhinweisvorrichtung und/oder von einem oder mehreren Eingabeparametern an der Eingabeeinrichtung abhängen.

Die erfindungsgemäße Bestellhinweisvorrichtung zur Verwendung in Restaurants, Gasthäuser und dergleichen weist eine von einem Gast betätigbare Eingabeeinrichtung, eine Kommunikationsschnittstelle, einen Speicher, eine optische Anzeigeeinrichtung und eine Steuereinheit auf. Die optische Anzeigeeinrichtung weist eine oder mehrere erste Lichtquellen und eine oder mehrere zweite Lichtquellen auf. Die Einstellung der Helligkeit der einen oder der mehreren ersten Lichtquellen und die Einstellung der Helligkeit der einen oder mehreren zweiten Lichtquellen hängen von einer Umgebungsbedingung ab. Zudem steht die Eingabeeinrichtung über die Steuereinheit mit der optischen Anzeigeeinrichtung derart in Wirkverbindung, dass die optische Anzeigeeinrichtung nach ihrer Aktivierung durch die Eingabeeinrichtung den Betätigungsvorgang der Eingabeeinrichtung mittels eines optischen Signals signalisiert, wobei die optische Anzeigeeinrichtung nach ihrer Aktivierung ein optisches Dauersignal ausgibt, welches deaktivierbar ist, wobei eine Einrichtung zum Erfassen der Zeitdauer seit der Aktivierung des optischen Dauersignals bereitgestellt ist.

In einigen bevorzugten Ausführungsformen der Erfindung weist die Bestellhinweisvorrichtung ferner einen Helligkeitssensor zum Messen der Umgebungshelligkeit auf und ist ferner dazu konfiguriert, die Helligkeit der einen oder der mehreren ersten Lichtquellen und der einen oder mehreren zweiten Lichtquellen an die gemessene Umgebungshelligkeit anzupassen.

In einigen bevorzugten Ausführungsformen der Erfindung weist die Bestellhinweisvorrichtung ferner ein Nahfeldkommunikations-Leser zum Lesen von Information von einem Nahfeldkommunikations-Etikett (NFC-Tag) auf.

In einigen weiter bevorzugten Ausführungsformen der Erfindung hängt eine Einstellung der einen oder der mehreren ersten Lichtquellen und eine Einstellung der einen oder der mehreren zweiten Lichtquellen von einer mit dem Nahfeldkommunikations-Leser gelesenen Information ab.

Erfindungsgemäß weist die Bestellhinweisvorrichtung ferner einen Bewegungsmelder auf und ist dazu konfiguriert, bei einem Versuch einer Entwendung der Bestellhinweisvorrichtung ein Alarmsignal auszugeben.

In einigen weiter bevorzugten Ausführungsformen der Erfindung weist das Ausgeben des Alarmsignals ein Blinken des optischen Ausgabemittels insbesondere der einen oder mehreren zweiten Lichtquellen auf.

In einigen weiter bevorzugten Ausführungsformen der Erfindung weist die Bestellhinweisvorrichtung ferner einen Lautsprecher auf, wobei das Ausgeben des Alarmsignals eine Audioausgabe über den Lautsprecher aufweist.

In einigen weiter bevorzugten Ausführungsformen der Erfindung weist das Ausgeben des Alarmsignals eine elektronische Übermittlung eines Alarmsignals über die Kommunikationsschnittstelle an ein Steuergerät auf.

Erfindungsgemäß erfolgt das Ausgeben des Alarmsignals stufenweise, wobei, wenn der Bewegungsmelder länger als eine erste Schwellenwertzeitdauer ein Signal an die Steuereinheit sendet, die Steuereinheit eine erste der Stufen einleitet, und wenn der Bewegungsmelder länger als eine zweite Schwellenwertzeitdauer das Signal an die Steuereinheit sendet, die Steuereinheit eine zweite der Stufen einleitet.

In einigen weiter bevorzugten Ausführungsformen der Erfindung weist das optische Ausgabemittel ferner einen Lichtleiter auf, wobei der Lichtleiter ferner im Wesentlichen in Form eines hohlen Kegelstumpfes bzw. eines sich verjüngenden Hohlzylinders ausgebildet ist.

In einigen weiter bevorzugten Ausführungsformen der Erfindung weist der Lichtleiter an einem ersten Ende eine oder mehrere erste Aussparungen auf, wobei die eine oder die mehreren ersten Lichtquellen jeweils in der einen oder den mehreren ersten Aussparungen angeordnet sind, und wobei die eine oder die mehreren zweiten Lichtquellen in der Bestellhinweisvorrichtung weiter außen als die eine oder die mehreren ersten Lichtquellen angeordnet sind.

In einigen weiter bevorzugten Ausführungsformen der Erfindung weist der Lichtleiter an einem zweiten Ende mindestens eine zweite Aussparung zum Durchleiten von mindestens einem Kabel auf.

In einigen bevorzugten Ausführungsformen der Erfindung weist die Bestellhinweisvorrichtung einen Projektor auf, wobei der Projektor dazu eingerichtet ist, Information auf eine Stellfläche der Bestellhinweisvorrichtung zu projizieren.

In einigen bevorzugten Ausführungsformen der Erfindung weist die Bestellhinweisvorrichtung einen Projektor auf, wobei der Projektor dazu eingerichtet ist, Information auf eine Stellfläche der Bestellhinweisvorrichtung zu projizieren und wobei der Projektor dazu eingerichtet ist, Information auf eine Stellfläche der Bestellhinweisvorrichtung zu projizieren, und wobei bei der Einstellung der Helligkeit der einen oder der mehreren ersten Lichtquellen und der Einstellung der Helligkeit der einen oder mehreren zweiten Lichtquellen ferner die Helligkeit der projizierten Information berücksichtigt wird.

Ein weiterer Aspekt der vorliegenden Erfindung betrifft ein System mit einer Vielzahl von in der vorliegenden Offenbarung beschriebenen Bestellhinweisvorrichtungen, wobei das System eine entsprechende Vielzahl von Nahfeldkommunikations-Etiketten aufweist.

In einigen bevorzugten Ausführungsformen des Systems weist die Vielzahl der Bestellhinweisvorrichtungen jeweils einen Nahfeldkommunikations-Leser zum Lesen von Information von der Vielzahl von Nahfeldkommunikations-Etiketten auf, wobei die Vielzahl von Bestellhinweisvorrichtungen über die jeweiligen Kommunikationsschnittstellen drahtlos mit einem Steuergerät verbindbar sind.

Ein weiterer Aspekt der vorliegenden Erfindung betrifft ein Verfahren zum Einstellen einer optischen Anzeigeeinrichtung einer Bestellhinweisvorrichtung, die eine Eingabeeinrichtung, eine Kommunikationsschnittstelle, einen Bewegungsmelder, einen Speicher, die optische Anzeigeeinrichtung und eine Steuereinheit aufweist, wobei die optische Anzeigeeinrichtung eine oder mehrere erste Lichtquellen und eine oder mehrere zweite Lichtquellen aufweist. Die Eingabeeinrichtung steht mit einer optischen Anzeigeeinrichtung derart in Wirkverbindung, dass die optischen Anzeigeeinrichtung nach ihrer Aktivierung durch die Eingabeeinrichtung den Betätigungsvorgang der Eingabeeinrichtung mittels eines optischen Signals signalisiert. Die optische Anzeigeeinrichtung gibt nach ihrer Aktivierung ein optisches Dauersignal aus, welches deaktivierbar ist. Ferner wird eine Einrichtung zum Erfassen der Zeitdauer seit der Aktivierung des optischen Dauersignals bereitgestellt. Die Einstellung der Helligkeit der einen oder der mehreren ersten Lichtquellen und die Einstellung der Helligkeit der einen oder mehreren zweiten Lichtquellen hängen von einer Umgebungsbedingung ab.

Ein weiterer Aspekt der vorliegenden Erfindung betrifft ein Verfahren zum Ausgeben eines Alarmsignals bei einem Versuch einer Entwendung einer in der vorliegenden Offenbarung beschriebenen Bestellhinweisvorrichtung, wobei das Verfahren ein Ausgeben eines Alarmsignals bei einem Entwendungsversuch aufweist.

### Kurzbeschreibung der Zeichnungen

Weitere Ziele, Merkmale, Vorteile und Anwendungsmöglichkeiten der erfindungsgemäßen Bestellhinweisvorrichtung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen
Fig. 1 eine Bestellhinweisvorrichtung in einer besonders bevorzugten Ausführungsform;
Fig. 2 ein System mit einer Vielzahl von Bestellhinweisvorrichtungen;
Fig. 3 ein Verfahren, wie eine Bestellhinweisvorrichtung mittels einem Nahfeldkommunikations-Etikett konfiguriert werden kann;
Fig. 4a und 4b ein Verfahren, wie ein Entwenden der Bestellhinweisvorrichtung verhindert werden kann;
Fig. 5 wie eine Entwarnung bzgl. eines Entwendens der Bestellhinweisvorrichtung gegeben werden kann;
Fig. 6 einen Lichtleiter, der in einer bevorzugen Ausführungsform der Bestellhinweisvorrichtung verbaut sein kann;
Fig. 7 den Lichtleiter aus Fig. 6, wobei schematisch eine Kabelführung illustriert ist;
Fig. 8 den in einer beispielhaften Bestellhinweisvorrichtung eingebauten Lichtleiter aus Fig. 6 oder 7.

### Ausführung der Erfindung

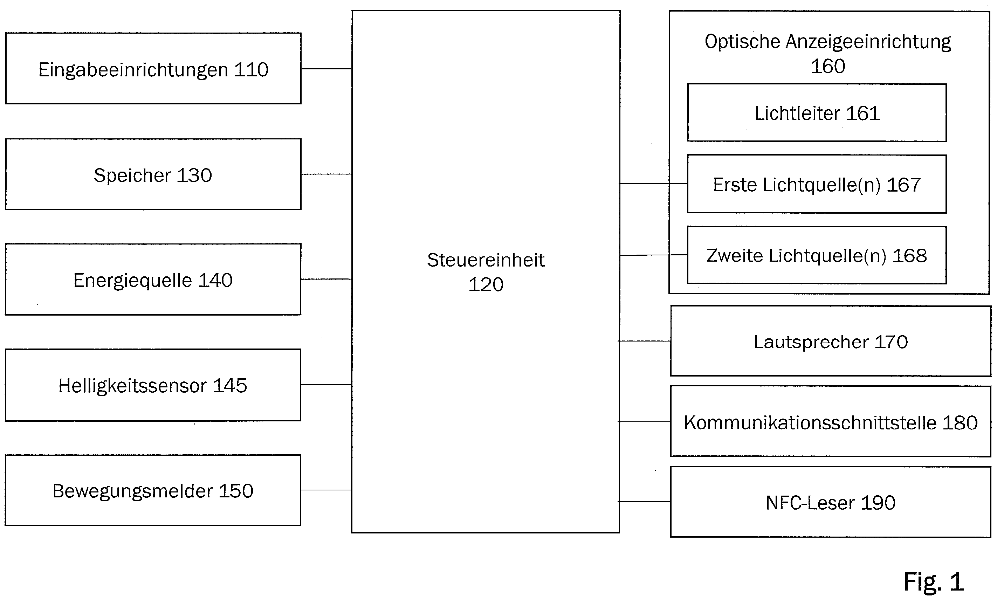

Wie in Fig. 1 dargestellt, weist die erfindungsgemäße Bestellhinweisvorrichtung 1 eine von einem Gast betätigbare Eingabeeinrichtung 110, eine Steuereinheit 120, und eine optische Anzeigeeinrichtung 160 auf. Die eine optische Anzeigeeinrichtung 160 umfasst eine oder mehrere erste Lichtquellen 167 und eine oder mehrere zweite Lichtquellen 168.

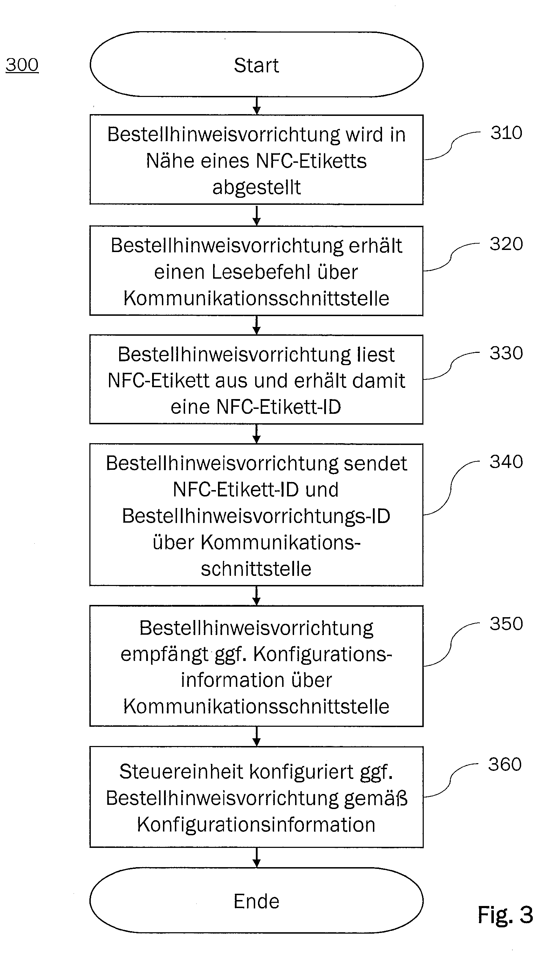

Die Eingabeeinrichtung kann über eine Steuereinheit 120 mit einer Kommunikationsschnittstelle 180 verbunden sein. So kann in bevorzugten Ausführungsformen der Erfindung mittels der Kommunikationsschnittstelle 180 ein Signal an mindestens ein Steuergerät 3 (siehe Fig. 3) übermittelt werden, wenn ein Gast die Eingabeeinrichtung 110 betätigt, womit eine Information zu einem Bestellwunsch eines Gastes sowie gegebenenfalls weitere Informationen bereitgestellt werden.

Vorzugsweise enthält die Bestellhinweisvorrichtung 1 einen Speicher 130. Damit kann die Bestellhinweisvorrichtung 1 beispielsweise individualisierbare Einstellungen speichern.

Vorzugsweise enthält die Bestellhinweisvorrichtung 1 ihre eigene Energiequelle 140, wie z. B. eine Batterie oder einen Akkumulator. Damit kann die Bestellhinweisvorrichtung 1 auch an Orten ohne Zugang zum Stromnetz (z. B. draußen) verwendet werden und ist leicht transportabel.

Vorzugsweise enthält die Bestellhinweisvorrichtung 1 ferner einen Helligkeitssensor 145. Damit kann die Bestellhinweisvorrichtung 1 die Umgebungslichtverhältnisse messen und ihre Einstellungen diesen anpassen.

Erfindungsgemäß enthält die Bestellhinweisvorrichtung 1 ferner einen Bewegungsmelder 150. Damit kann die Bestellhinweisvorrichtung 1 feststellen, ob sie bewegt wird. Die Bestellhinweisvorrichtung 1 kann dann je nachdem, ob und ggf. wie sie bewegt wird, ihre Einstellungen anpassen.

Wie bereits erwähnt enthält die optische Anzeigeeinrichtung 160 eine oder mehrere erste Lichtquellen 167 und eine oder mehrere zweite Lichtquellen. Die optische Anzeigeeinrichtung 160 kann ferner einen Lichtleiter 160 aufweisen. Vorzugsweise kann die Bestellhinweisvorrichtung 1 ferner einen Lautsprecher 170 zum Ausgeben eines Audiosignals aufweisen.

Wie bereits erwähnt enthält die Bestellhinweisvorrichtung 1 eine Kommunikationsschnittstelle 180. Diese Kommunikationsschnittstelle 180 ist vorzugsweise eine drahtlose Kommunikationsschnittstelle. Vorzugsweise umfasst diese drahtlose Kommunikationsschnittstelle Bluetooth^{®} bzw. eine Kommunikationsschnittstelle gemäß Industriestandard IEEE 802.15.1 und/oder eine WLAN-Kommunikationsschnittstelle bzw. eine Kommunikationsschnittstelle gemäß Standard der IEEE-802.11-Familie und/oder eine ähnliche Kommunikationsschnittstelle.

Vorzugsweise kann die Bestellhinweisvorrichtung 1 ferner einen Nahfeldkommunikationsleser (NFC-Leser) 190 zum Lesen eines Nahfeldkommunikations-Etiketts 2 aufweisen.

Die erfindungsgemäße Bestellhinweisvorrichtung 1 ist vorzugsweise in Form eines Würfels ausgestaltet, insbesondere eines zum Großteil transparenten, leuchtenden Würfels. Text-Flächen auf den Eingabeeinrichtungen 110 (Touch-Buttons) können ausgestanzt sein. Dadurch können diese auch bei Dunkelheit gelesen und erkannt werden.

Die Vorteile, welche die erfindungsgemäße Bestellhinweisvorrichtung 1 für Gastronomie und Restaurants bietet, sind, dass es in dieser Ausführung vorzugsweise Kerzen auf einem Restauranttisch ersetzt und zu einem individualisierbaren Lichtgadget macht, welches darüber hinaus noch zur Übersichtssteigerung für Kellner und zur Stressminimierung und höherer Zufriedenheit der Gäste beiträgt.

Weiterhin ist eine effiziente Konfigurierung einer Vielzahl von Bestellhinweisvorrichtungen möglich.

Da es sich um eine "Plug-and-play"-Lösung handelt, ist die Handhabung der Bestellhinweisvorrichtung besonders intuitiv gehalten, was die Bedienung für Gastronomen sowie für Kellner, als auch für Gäste sehr einfach macht.

Im Gegensatz zu ähnlichen Konzepten hat die erfindungsgemäße Bestellhinweisvorrichtung 1 vorzugsweise zwei Lichtquellen - vorzugsweise zwei Sätze von Lichtquellen. Der eine Satz Lichtquellen kann für eine gute Streuung der andere Satz Lichtquellen für eine gute Sichtbarkeit optimiert sein. Damit kann eine Sichtbarkeit unter verschiedenen Bedingungen, insbesondere verschiedenen äußeren Umständen, verbessert werden.

### Helligkeitseinstellung nach Umgebungslicht

Die erfindungsgemäße Bestellhinweisvorrichtung kann einen Helligkeitssensor 145 zum Messen der Umgebungshelligkeit aufweisen. in besonders bevorzugten Ausführungsformen der Erfindung werden für das Messen der Umgebungshelligkeit die eine oder die mehreren ersten Lichtquellen 167 und die eine oder die mehreren zweiten Lichtquellen 168 ausgeschaltet und nach dem Messen wieder wie vor der Messung konfiguriert. Damit wird sichergestellt, dass die Messung tatsächlich die Umgebungshelligkeit misst und die Messung nicht durch das optische Anzeigemittel 160 verfälscht wird.

Der Helligkeitssensor 145 kann beispielsweise ein Fototransistor sein. Dem Helligkeitssensor 145 können vorzugsweise Widerstände und/oder Kondensatoren nachgeschaltet sein. Oft sind Helligkeitssensoren 145, insbesondere Fototransistoren, sehr empfindlich, was zu einer Übersteuerung des Ausgabesignals des Helligkeitssensors 145 führen kann. Mit den Widerständen kann die Ausgabe des Helligkeitssensors 145 auf den gewünschten Bereich dimensioniert werden. In anderen Worten kann so auch bei einem sehr empfindlichen Helligkeitssensor 145 eine Steuerung der einen oder der mehreren ersten Lichtquellen 167 und der einen oder mehreren zweiten Lichtquellen 168 an die gemessene Umgebungshelligkeit angepasst werden.

Ferner können Helligkeitssensoren 145, insbesondere Fototransistoren, sehr schnell reagieren. Künstliches Licht, wie z. B. Licht von Fluoreszenzlampen bzw. Leuchtstofflampen, ist oft nicht konstant, sondern variiert mit einer Sinusschwingung aus dem Stromnetz. Eine Frequenz aus dem Stromnetz, die z. B. 50 Hz oder 60 Hz betragen kann, überträgt sich dabei auf das künstliche Licht. Während der Mensch im Allgemeinen dieses Flackern nicht wahrnimmt, könnte eine Steuerung der Helligkeit der einen oder der mehreren ersten Lichtquellen 167 und der einen oder mehreren zweiten Lichtquellen 168 auf einer Grundlage einer direkt mit einem Helligkeitssensor 145 gemessenen Umgebungshelligkeit eine rege Helligkeitssteuerung mit sich ziehen. Durch die Verwendung von einem oder mehreren Kondensatoren kann das Lichtsignal des Helligkeitssensors 145 geglättet werden. So wird ein sehr reges Steuern der Helligkeit der einen oder der mehreren ersten Lichtquellen 167 und der einen oder mehreren zweiten Lichtquellen 168 vermieden, was die Energiequelle (z. B. eine Batterie oder einen Akkumulator) schont.

Eine bevorzugte Ausführungsform der erfindungsgemäßen Bestellhinweisvorrichtung kann dazu konfiguriert sein, die Helligkeit der einen oder der mehreren ersten Lichtquellen 167 und der einen oder mehreren zweiten Lichtquellen 168 an die gemessene Umgebungshelligkeit anzupassen.

Damit ist die Bestellhinweisvorrichtung sowohl in dunkler Umgebung als auch in heller Umgebung gut sichtbar.

Ferner können die eine oder die mehreren zweiten Lichtquellen 168 in der Bestellhinweisvorrichtung 1 weiter außen als die eine oder die mehreren ersten Lichtquellen 167 angeordnet sein. Infolgedessen können die eine oder die mehreren zweiten Lichtquellen 168 besser sichtbar sein. Ferner können die eine oder die mehreren ersten Lichtquellen 167 derart angeordnet sein, dass die eine oder die mehreren ersten Lichtquellen 167 besser gestreutes Licht aussenden, als die eine oder die mehreren zweiten Lichtquellen 168.

Dementsprechend kann die erfindungsgemäße Bestellhinweisvorrichtung 1 bei geringem Umgebungslicht die Helligkeit der einen oder der mehreren zweiten Lichtquellen 168 reduzieren oder diese ganz abstellen. Ferner kann die erfindungsgemäße Bestellhinweisvorrichtung bei geringem Umgebungslicht die Helligkeit der einen oder der mehreren ersten Lichtquellen 167 dem Umgebungslicht und der Helligkeit der einen oder der mehreren zweiten Lichtquellen 168 anpassen.

Vorzugsweise wird in dem Speicher 130 der Bestellhinweisvorrichtung 1 eine Tabelle gespeichert, in der für verschiedene von dem Helligkeitssensor 145 gemessene Helligkeitsbereiche entsprechende Helligkeitseinstellungsstufen für die eine oder die mehreren ersten Lichtquellen 167 und für die eine oder die mehreren zweiten Lichtquellen 168 angegeben sind. Die Helligkeitsbereiche können vorzugsweise durch zwei von einer Vielzahl von Helligkeitsschwellenwerten festgelegt sein. Die entsprechenden Helligkeitseinstellungsstufen können auch ein gänzliches Abschalten (Einstellung auf Helligkeitsstufe null) der einen oder der mehreren ersten Lichtquellen 167 und/oder der einen oder der mehreren zweiten Lichtquellen 168 umfassen. Vorzugsweise umfassen die Helligkeitseinstellungsstufen für der einen oder der mehreren ersten Lichtquellen 167 und/oder der einen oder der mehreren zweiten Lichtquellen 168 mehr als nur jeweils zwei Stufen, beispielsweise drei, vier, fünf, zehn oder mehr Helligkeitseinstellungsstufen für die eine oder die mehreren ersten Lichtquellen 167 und beispielsweise zwei, drei, vier, fünf, zehn oder mehr Helligkeitseinstellungsstufen für die eine oder die mehreren zweiten Lichtquellen 168.

Die Steuereinheit 120 der Bestellhinweisvorrichtung 1 kann dementsprechend ein Helligkeitssignal von dem Helligkeitssensor 145 - ggf. nach Durchlaufen einer Widerstands- und/oder Kondensatorschaltung - empfangen, aus der Tabelle, die in dem Speicher 130 gespeichert ist, die entsprechend einzustellende Helligkeit der einen oder der mehreren ersten Lichtquellen 167 und der einen oder der mehreren zweiten Lichtquellen 168 ermitteln, und diese Helligkeit an der einen oder den mehreren ersten Lichtquellen 167 und der einen oder den mehreren zweiten Lichtquellen 168 einstellen.

Somit ist die Bestellhinweisvorrichtung unter verschiedenen Umgebungslichtbedingungen immer gut sichtbar.

### Synchronisation über Nahfeldkommunikations-Etiketten

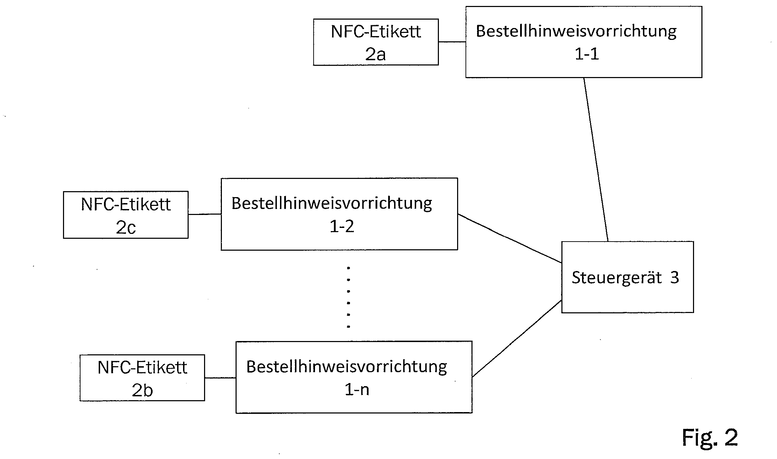

Die Bestellhinweisvorrichtung hat verschiedene Einstellungsmöglichkeiten. In einem Gastronomie- bzw. Hotelbetrieb kann eine Vielzahl von Bestellhinweisvorrichtungen in Verwendung sein (siehe Fig. 2). Die korrekten Einstellungen können für an verschiedenen Orten aufgestellte Bestellhinweisvorrichtungen verschieden sein. Das Einstellen der jeweiligen Bestellhinweisvorrichtung gemäß dessen Aufstellort kann vorzugsweise mittels Lesen eines Nahfeldkommunikations-Etikett erfolgen, wie in einem Beispielverfahren 300 anhand Fig. 3 erklärt.

In einigen bevorzugten Ausführungsformen weist die Bestellhinweisvorrichtung 1 ferner ein Nahfeldkommunikations-Leser zum Lesen von Information von einem Nahfeldkommunikations-Etikett auf.

In einigen besonders bevorzugten Ausführungsformen hängt eine Einstellung der einen oder der mehreren ersten Lichtquellen und eine Einstellung der einen oder der mehreren zweiten Lichtquellen von einer mit dem Nahfeldkommunikations-Leser gelesenen Information ab.

Zum Beispiel kann eine Einstellung der einen oder der mehreren ersten Lichtquellen 167 und eine Einstellung der einen oder der mehreren zweiten Lichtquellen 168 vorgenommen werden, indem in einem Schritt 310 eine Bestellhinweisvorrichtung 1 in der Nähe eines NFC-Etiketts 2 abgestellt wird (Schritt 310). Das NFC-Etikett 2 kann beispielsweise auf, in oder unter einem Tisch angebracht sein. Ein Bediener (beispielsweise ein Kellner) eines Steuergeräts 3 kann über das Steuergerät 3 der Bestellhinweisvorrichtung 1 über die Kommunikationsschnittstelle 180 einen Lesebefehl senden, das in der Nähe befindliche NFC-Etikett auszulesen (Schritt 320), was die Bestellhinweisvorrichtung aus ausführt (330). Aus dem NFC-Etikett 2 liest die Bestellhinweisvorrichtung 1 ein NFC-Etikett-Identität (NFC-Etikett-ID) aus. Diese schickt (Schritt 340) sie zusammen mit der eigenen Bestellhinweisvorrichtungskennung (Bestellhinweisvorrichtungs-ID) über die Kommunikationsschnittstelle 180 an das Steuergerät 3.

Das Steuergerät 3 hat damit die Information mit welchem NFC-Etikett die Bestellhinweisvorrichtung verknüpft ist. Vorzugsweise ist in einem Speicher des Steuergeräts 3 bereits gespeichert, wo welches NFC-Etikett 2 ist und mit welchen Einstellungen die Bestellhinweisvorrichtung 1 konfiguriert worden ist. Wenn die aktuellen Einstellungen der Bestellhinweisvorrichtung 1 nicht die richtigen für den Platz beim nun verknüpften NFC-Etikett sind, kann das Steuergerät 3 die Information für die richtige Konfiguration an die Bestellhinweisvorrichtung 1 senden (350). Somit muss nicht jedes Mal von Grund auf neu ausgelotet werden, welche Einstellungen für die Bestellhinweisvorrichtung 1 an einem neuen Platz die richtigen sind, sondern stehen mit der Verknüpfung mit dem NFC-Etikett fest. Das Umplazieren der Bestellhinweisvorrichtungen 1 kann beispielsweise geschehen, weil die Bestellhinweisvorrichtungen 1 zum Laden an eine Ladestation eingesammelt werden und nach dem Laden einer Vielzahl von Bestellhinweisvorrichtungen 1 (siehe Fig. 2) die Bestellhinweisvorrichtungen 1 an anderen Platzen wieder hingestellt werden. Die Effizienz der Konfiguration der Bestellhinweisvorrichtungen kann so gesteigert werden.

Stellt das Steuergerät 3 hingegen fest, dass die aktuellen Einstellungen der Bestellhinweisvorrichtung 1 bereits den richtigen Einstellungen für den Platz beim nun verknüpften NFC-Etikett sind, wird vorzugsweise keine Konfigurationsinformation versendet. Da das Konfigurieren Zeit beansprucht, kann die Effizienz zur richtigen Konfiguration somit zusätzlich gesteigert werden.

Empfängt die Bestellhinweisvorrichtung 1 eine Konfigurationsinformation über die Kommunikationsschnittstelle 180, kann die Steuereinheit 120 der Bestellhinweisvorrichtung 1 die Bestellhinweisvorrichtung 1 gemäß der Konfigurationsinformation konfigurieren. Die Konfigurationsinformation enthält vorzugsweise Information bezüglich der Einstellungen der einen oder der mehreren ersten Lichtquellen 167 und der einen oder der mehreren zweiten Lichtquelle 168.

Durch das Einstellen der Bestellhinweisvorrichtung per Lesen eines Nahfeldkommunikations-Etiketts kann sichergestellt werden, dass die Bestellhinweisvorrichtung gemäß seinem Aufstellort richtig eingestellt wird.

Dies führt zu einer besonders effizienten individuellen Einstellung einer Vielzahl von Bestellhinweisvorrichtungen.

### Entwendungshinderungseinrichtung

Die Bestellhinweisvorrichtung 1 enthält vorzugsweise eine Energiequelle 140, wie z. B. eine Batterie oder einen Akkumulator. Dadurch ist die Bestellhinweisvorrichtung 1 leicht transportabel, was auch ein Risiko birgt, dass die Bestellhinweisvorrichtung 1 von Gästen entwendet wird.

Die Bestellhinweisvorrichtung 1 ist daher erfindungsgemäß derart ausgebildet, dass eine Entwendung der Bestellhinweisvorrichtung 1 verhindert bzw. zumindest erschwert wird. Beispielsweise kann bei Beschleunigen der Bestellhinweisvorrichtung 1 durch eine von außen wirkende Kraft auf die Bestellhinweisvorrichtung 1 die Sichtbarkeit durch entsprechendes Einstellen der Helligkeit der einen oder der mehreren ersten Lichtquellen 167 und der Helligkeit der einen oder der mehreren zweiten Lichtquellen 168 erhöht werden. Alternativ oder zusätzlich können die eine oder die mehreren ersten Lichtquellen 167 und/oder die eine oder die mehreren zweiten Lichtquellen 168 blinken, was die Aufmerksamkeit zusätzlich erregt (und somit die Sichtbarkeit verbessert).

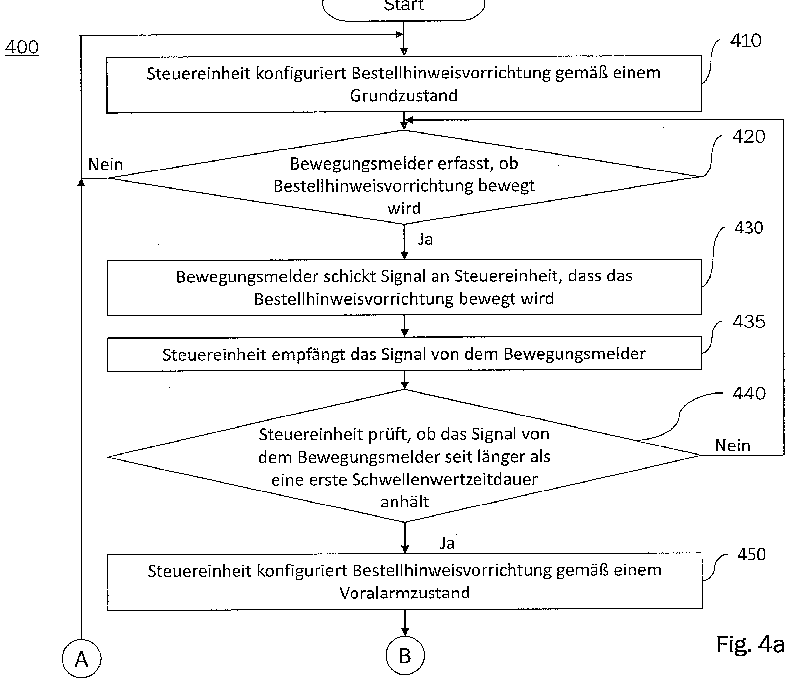

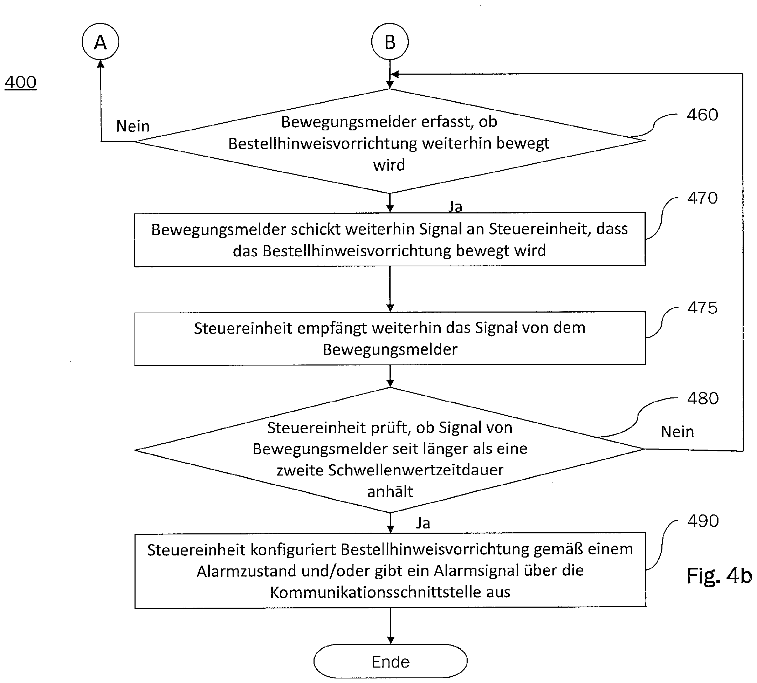

Erfindungsgemäß schlägt die Bestellhinweisvorrichtung bei einem Versuch einer Entwendung der Bestellhinweisvorrichtung Alarm. Verfahren 400 zum Schlagen von Alarm bei versuchter Entwendung wird nachfolgend anhand der Figuren 4a und 4b erklärt.

Die Bestellhinweisvorrichtung 1 kann sich in einem Grundzustand befinden. Wenn sich die Bestellhinweisvorrichtung 1 in einem anderen Zustand befinden sollte, so sollte zu Beginn die Bestellhinweisvorrichtung 1 in den Grundzustand übergehen. In optionalem Schritt 410 konfiguriert die Steuereinheit 120 die Bestellhinweisvorrichtung gemäß einem Grundzustand. Die Einstellungen für den Grundzustand kann in einem Speicher 130 hinterlegt sein und kann im Voraus von einem Steuergerät 3 über die Kommunikationsschnittstelle 180 festgelegt werden.

Ein Bewegungsmelder 150 der Bestellhinweisvorrichtung 1 erfasst in Schritt 420, ob die Bestellhinweisvorrichtung 1 gerade bewegt wird. Der Bewegungsmelder 150 kann ein Gyroskop sein. Vorzugsweise kann der Bewegungsmelder 150 ein Gyroskop sein, das fähig ist, Ereignissignale an die Steuereinheit 120 zu senden. Zusätzlich oder alternativ dazu kann die Steuereinheit 120 oder der Bewegungsmelder 150 ausschließlich bestimmte, relevante Bewegungskomponenten (z. B. ein Bewegungsanteil in eine bestimmte Richtung x) des Signals des Bewegungsmelders berücksichtigen. In anderen Worten können bestimmte andere, irrelevante Bewegungskomponenten des Signals des Bewegungsmelders 150 ignoriert werden. Beispielsweise können in einigen Ausführungsformen der Erfindung Bewegungen, welche lediglich ein Drehen der Bestellhinweisvorrichtung 1 betreffen, ignoriert werden. So kann besser erfasst werden, ob eine Bestellhinweisvorrichtung 1 im Begriff ist, entwendet zu werden.

Falls der Bewegungsmelder 150 erfasst, dass die Bestellhinweisvorrichtung nicht bewegt wird, bzw. nicht in relevanter weise bewegt wird, schickt der Bewegungsmelder 150 vorzugsweise kein Signal an die Steuereinheit 120. Durch das Ausbleiben eines Empfangens eines Signals von dem Bewegungsmelder 150, erkennt die Steuereinheit 120, dass die Bestellhinweisvorrichtung 1 nicht bewegt wird, bzw. nicht in relevanter weise bewegt wird. Die Steuereinheit kann folglich optional ggf. die Bestellhinweisvorrichtung wieder gemäß einem Grundzustand konfigurieren.

Falls der Bewegungsmelder 150 erfasst, dass die Bestellhinweisvorrichtung 1 bewegt wird, bzw. in relevanter weise bewegt wird, schickt (Schritt 430) der Bewegungsmelder 150 vorzugsweise ein Signal an die Steuereinheit 120, dass die Bestellhinweisvorrichtung 1 bewegt wird, bzw. in relevanter weise bewegt wird. Durch das Empfangen (Schritt 435) eines Signals von dem Bewegungsmelder 150, erkennt die Steuereinheit 120, dass die Bestellhinweisvorrichtung 1 bewegt wird bzw. in relevanter weise bewegt wird. Die Steuereinheit prüft infolgedessen in Schritt 440, ob das Signal von dem Bewegungsmelder 150 bereits länger als eine erste Schwellenwertzeitdauer anhält. Die erste Schwellenwertzeitdauer kann im Speicher 130 hinterlegt sein und kann im Voraus über die Kommunikationsschnittstelle 180 von einem Steuergerät 3 eingestellt worden sein. Sie kann beispielsweise zwischen 5 und 15 s, z. B. ungefähr 10 s betragen.

Wenn das Signal von dem Bewegungsmelder 150 noch nicht länger als eine erste Schwellenwertzeitdauer anhält, wird geprüft, ob die Bewegung weiter andauert (wieder Schritt 420).

Wenn das Signal von dem Bewegungsmelder 150 bereits länger als eine erste Schwellenwertzeitdauer anhält, konfiguriert (450) die Steuereinheit die Einstellungen der Bestellhinweisvorrichtung gemäß einem Voralarmzustand, die ähnlich wie die erste Schwellenwertzeitdauer in einem Speicher 130 hinterlegt sein kann und im Voraus über die Kommunikationsschnittstelle 180 von einem Steuergerät 3 eingestellt worden sein kann.

Vorzugsweise kann die Sichtbarkeit der Bestellhinweisvorrichtung 1 im Voralarmzustand erhöht werden, indem die optische Anzeigeeinrichtung 160 zu blinken beginnt.

Danach wird geprüft, ob die Bewegung weiter andauert (Schritt 460).

Falls der Bewegungsmelder 150 erfasst, dass die Bestellhinweisvorrichtung nicht mehr bewegt wird, bzw. nicht in relevanter weise bewegt wird, schickt der Bewegungsmelder 150 vorzugsweise kein Signal an die Steuereinheit 120. Durch das Ausbleiben eines Empfangens eines Signals von dem Bewegungsmelder 150, erkennt die Steuereinheit 120, dass die Bestellhinweisvorrichtung 1 nicht mehr bewegt wird, bzw. nicht mehr in relevanter weise bewegt wird. Die Steuereinheit 120 kann nun die Bestellhinweisvorrichtung wieder gemäß einem Grundzustand konfigurieren (Schritt 410).

Falls der Bewegungsmelder 150 erfasst, dass die Bestellhinweisvorrichtung 1 bewegt wird, bzw. in relevanter weise bewegt wird, schickt (Schritt 470) der Bewegungsmelder 150 vorzugsweise weiterhin ein Signal an die Steuereinheit 120, dass die Bestellhinweisvorrichtung 1 bewegt wird, bzw. in relevanter weise bewegt wird. Durch das Empfangen (Schritt 475) des Signals von dem Bewegungsmelder 150, erkennt die Steuereinheit 120, dass die Bestellhinweisvorrichtung 1 weiterhin bewegt wird bzw. in relevanter weise bewegt wird. Die Steuereinheit prüft infolgedessen in Schritt 480, ob das Signal von dem Bewegungsmelder 150 bereits länger als eine zweite Schwellenwertzeitdauer anhält, die länger oder gleich der ersten Schwellenzeitdauer ist. Die zweite Schwellenwertzeitdauer kann im Speicher 130 hinterlegt sein und kann im Voraus über die Kommunikationsschnittstelle 180 von einem Steuergerät 3 eingestellt worden sein. Sie kann beispielsweise zwischen 11 und 20 s, z. B. ungefähr 15 s betragen. Alternativ kann auf die zusätzliche Dauer ab Ablauf der ersten Schwellenwertzeitdauer abgestellt werden. Diese kann dann beispielsweise zwischen 0 und 10 s betragen.

Wenn das Signal von dem Bewegungsmelder 150 noch nicht länger als die zweite Schwellenwertzeitdauer anhält, wird geprüft, ob die Bewegung weiter andauert (wieder Schritt 460). Der Voralarmzustand hält weiterhin an.

Wenn das Signal von dem Bewegungsmelder 150 bereits länger als die zweit Schwellenwertzeitdauer anhält, konfiguriert (490) die Steuereinheit die Einstellungen der Bestellhinweisvorrichtung gemäß einem Alarmzustand, die ähnlich wie die der Voralarmzustand in dem Speicher 130 hinterlegt sein kann und im Voraus über die Kommunikationsschnittstelle 180 von dem Steuergerät 3 eingestellt worden sein kann. Vorzugsweise wird in dem Alarmzustand zusätzlich zu der Verbesserten Sichtbarkeit des Voralarmzustands ein Audiosignal über einen Lautsprecher 170 ausgegeben. Ferner wird in dem Alarmzustand über die Kommunikationsschnittstelle 180 ein Alarmsignal an das Steuergerät 3 ausgegeben.

Ein Bediener (z. B. ein Kellner) des Steuergeräts 3 ist damit informiert, dass eine Bestellhinweisvorrichtung 1 im Begriff ist, entwendet zu werden und kann ggf. aufgrund der verbesserten Sichtbarkeit bzw. der Audioausgabe die Bestellhinweisvorrichtung 1 leicht orten und der Entwendung entgegenwirken.

Vorzugsweise kann die Sichtbarkeit der Bestellhinweisvorrichtung 1 im Voralarmzustand erhöht werden, indem die optische Anzeigeeinrichtung 160 zu blinken beginnt. Vorzugsweise sind der eine oder die mehreren zweiten Lichtquellen 168 besser sichtbar als die eine oder die mehreren ersten Lichtquellen 167. Vorzugsweise werden für die Sichtbarkeitsverbesserung in einem Alarmzustand oder einem Voralarmzustand zumindest die eine oder die mehreren zweiten Lichtquellen 168 angeschaltet bzw. zum Blinken eingestellt.

Mit dem Verfahren 400 kann eine Sichtbarkeit der Bestellhinweisvorrichtung 1 präziser genau dann erhöht werden, wenn die Bestellhinweisvorrichtung 1 im Begriff ist, entwendet zu werden.

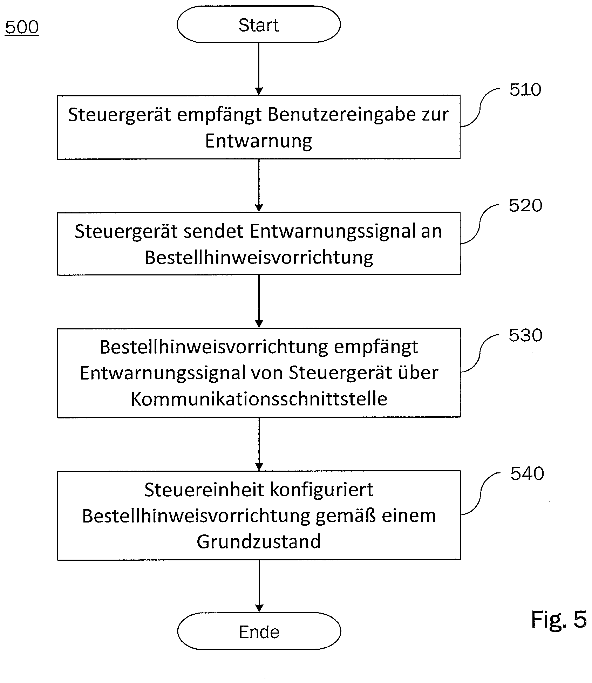

Es sei angemerkt, dass in einer bevorzugten Ausführungsform, die Bestellhinweisvorrichtung 1 nicht von selbst von einem Alarmzustand in einen Grundzustand übergeht, sondern ein Empfangen eines Entwarnungssignals über die Kommunikationsschnittstelle 180 bedingt (siehe Fig. 5). Beispielsweise gibt ein Bediener (z. B. ein Kellner) des Steuergeräts 3 in Schritt 510 eine Benutzereingabe in das Steuergerät 3 zur Entwarnung ein. Dieses sendet ein Entwarnungssignal an die Bestellhinweisvorrichtung (Schritt 520). In Schritt 530 empfängt die Bestellhinweisvorrichtung das Entwarnungssignal über die Kommunikationsschnittstelle 180. Infolgedessen konfiguriert die Steuereinheit die Bestellhinweisvorrichtung wieder gemäß einem Grundzustand (Schritt 540).

So wird sichergestellt, dass die Sichtbarkeit erhöht bleibt, solange die Bestellhinweisvorrichtung im Begriff ist, entwendet zu werden.

### Lichtleiter

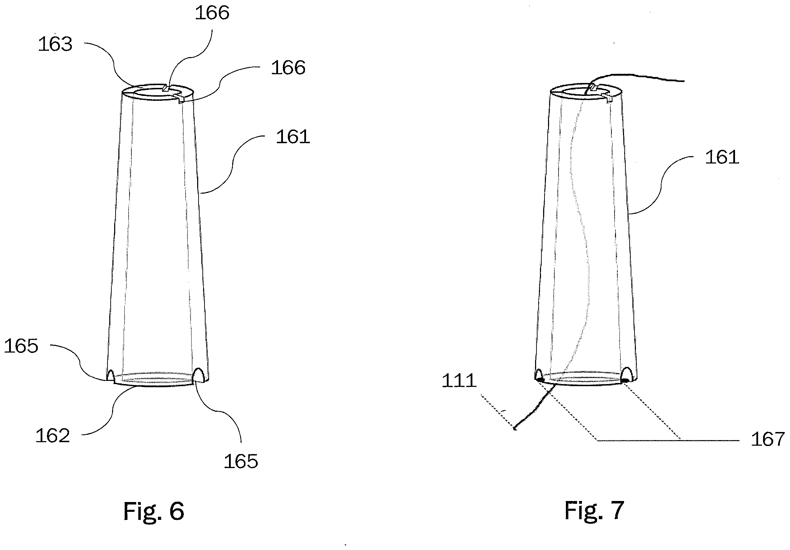

Wie in Figuren 6, 7 und 8 dargestellt, weist in bevorzugten Ausführungsformen der Erfindung der optischen Anzeigeeinrichtung 160 ein Lichtleiter 161 auf. Dieser Lichtleiter 161 hat bevorzugt im Wesentlichen eine Form eines hohlen Kegelstumpfs bzw. eines sich verjüngenden hohlen Zylinders. An einem unteren Ende 162 des Lichtleiters 161 sind bevorzugt eine oder mehrere Aussparungen 165 zum Aufnehmen der einen oder mehreren ersten Lichtquellen 167. Die eine oder die mehreren ersten Lichtquellen 167 können RGB-LEDs sein. Die eine oder die mehreren ersten Lichtquellen 167 können weiter innen angeordnet sein als die eine oder die mehreren zweiten Lichtquellen 168. Durch das Positionieren der ersten Lichtquellen 167 unten in der Aussparung 165 in der Lichtleiterwand wird aufgrund der konischen Form des Lichtleiters 161 das Licht der ersten Lichtquelle besonders homogen gestreut. Bevorzugt kann der Lichtleiter 161 aus einem transparenten Material, z. B. einem transparenten Plastik, z. B. einem Polycarbonat-Gemisch, erzeugt sein. Bevorzugt ist die äußere Oberfläche des Lichtleiters 161 matt. Dies kann bewerkstelligt werden, indem die Oberfläche aufgeraut wird. Die innere Fläche des Lichtleiters 161 ist bevorzugt glatt.

Der Lichtleiter enthält bevorzugt an einem oberen Ende 163 eine oder mehrere obere Aussparungen 166. Ein Kabel 111, das zum Beispiel eine Eingabeeinrichtung 110 mit der Steuereinheit verbinden kann, kann durch den Hohlraum des Lichtleiters 161 und ggf. durch die obere Aussparung 166 des Lichtleiters 161 geführt werden.

So wird sichergestellt, dass das Kabel 111 keinen Schatten wirft. Damit wird die Sichtbarkeit der Bestellhinweisvorrichtung 1 weiter verbessert.

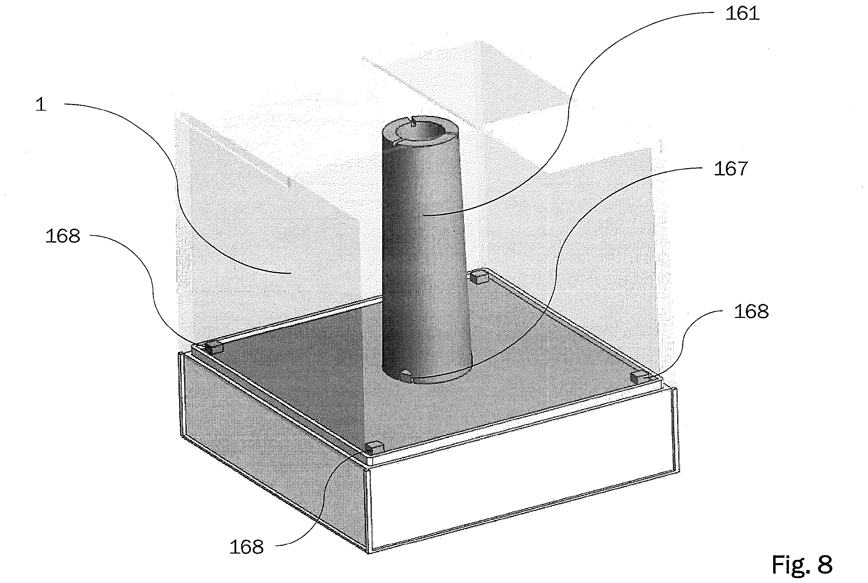

Die eine oder die mehreren zweiten Lichtquellen 168 sind bevorzugt außerhalb des Lichtleiters 161 (siehe Fig. 8) jedoch in der Bestellhinweisvorrichtung 1 angeordnet. Damit wird eine Sichtbarkeit der einen oder der mehreren zweiten Lichtquellen 168 gegenüber der einen oder der mehreren ersten Lichtquellen 167, die im bzw. unter dem Lichtleiter 161 angeordnet sind, erhöht, weil Licht das den Lichtleiter durchdringen muss, an der matten Oberfläche des Lichtleiters 161 teilweise reflektiert wird. Bei Anordnung der einen oder der mehreren zweiten Lichtquellen 168 außerhalb des Lichtleiters 161 (jedoch in der Bestellhinweisvorrichtung 1) kann die Sichtbarkeit erhöht werden.

Durch die separate Steuerbarkeit der ersten Lichtquellen 167 und der zweiten Lichtquellen 168 kann die Sichtbarkeit den äußeren Umständen gut angepasst werden.

### Projektor

In einigen bevorzugten Ausführungsformen der Erfindung weist die Bestellhinweisvorrichtung 1 ferner einen Projektor auf, wobei der Projektor dazu eingerichtet ist, Information auf eine Stellfläche der Bestellhinweisvorrichtung 1 zu projizieren. Der Projektor kann in einer oberen Hälfte der Bestellhinweisvorrichtung 1 verortet sein. Dies hat den Vorteil, dass die Entfernung von dem Projektor zur Stellfläche etwas weiter ist und eine Verzerrung durch die Projektion geringer sein kann.

Die Stellfläche der Bestellhinweisvorrichtung 1 kann beispielsweise eine Tischoberfläche sein. Zum Beispiel kann die auf die Stellfläche projizierte Information eine Menüempfehlung sein.

In einigen besonders bevorzugten Ausführungsformen der Erfindung berücksichtigt die Steuereinheit bei der Einstellung der Helligkeit der einen oder der mehreren ersten Lichtquellen und der Einstellung der Helligkeit der einen oder der mehreren zweiten Lichtquellen ferner die Helligkeit der projizierten Information.

### Allgemeines

Die erfindungsgemäße Bestellhinweisvorrichtung 1 beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Bezugszeichenliste

1 Bestellhinweisvorrichtung
2 Nahfeldkommunikations-Etikett
3 Steuergerät
110 Eingabeeinrichtungen
111 Kabel
120 Steuereinheit
130 Speicher
140 Energiequelle
145 Helligkeitssensor
150 Bewegungsmelder
160 Optische Anzeigeeinrichtung
161 Lichtleiter
162 Unteres Ende des Lichtleiters
163 Oberes Ende des Lichtleiters
165 Untere Aussparung
166 Obere Aussparung
167 Innere RGB-LEDs
168 Äußere RGB-LEDs
170 Lautsprecher
180 Kommunikationsschnittstelle

## Patentansprüche

1. Bestellhinweisvorrichtung (1) zur Verwendung in Restaurants, Gasthäuser und dergleichen, wobei die Bestellhinweisvorrichtung (1) eine von einem Gast betätigbare Eingabeeinrichtung (110), eine Kommunikationsschnittstelle (180), einen Speicher (130), einen Bewegungsmelder (150), der erkennt, ob die Bestellhinweisvorrichtung (1) bewegt wird, eine optische Anzeigeeinrichtung (160) und eine Steuereinheit (120) aufweist, wobei die optische Anzeigeeinrichtung (160) eine oder mehrere erste Lichtquellen (167) und eine oder mehrere zweite Lichtquellen (168) aufweist, wobei die Einstellung der Helligkeit der einen oder der mehreren ersten Lichtquellen (167) und die Einstellung der Helligkeit der einen oder mehreren zweiten Lichtquellen (168) von einer Umgebungsbedingung abhängen,
wobei die Eingabeeinrichtung (110) über die Steuereinheit (120) mit der optischen Anzeigeeinrichtung (160) derart in Wirkverbindung steht, dass die optische Anzeigeeinrichtung (160) nach ihrer Aktivierung durch die Eingabeeinrichtung (110) den Betätigungssvorgang der Eingabeeinrichtung (110) mittels eines optischen Signals signalisiert, wobei die optische Anzeigeeinrichtung (160) nach ihrer Aktivierung ein optisches Dauersignal ausgibt, welches deaktivierbar ist, wobei die Bestellhinweisvorrichtung (1) zudem eine Einrichtung zum Erfassen der Zeitdauer seit der Aktivierung des optischen Dauersignals umfasst,
wobei die Bestellhinweisvorrichtung (1) dazu konfiguriert ist, bei einem Versuch einer Entwendung der Bestellhinweisvorrichtung (1) ein Alarmsignal auszugeben (490),
wobei das Ausgeben (490) des Alarmsignals stufenweise erfolgt,
wobei, wenn der Bewegungsmelder (150) länger als eine erste Schwellenwertzeitdauer ein Signal an die Steuereinheit (120) sendet (430), die Steuereinheit (120) eine erste der Stufen einleitet (450), und
wenn der Bewegungsmelder (150) länger als eine zweite Schwellenwertzeitdauer das Signal an die Steuereinheit (120) sendet (470), die Steuereinheit (120) eine zweite der Stufen einleitet (490).

2. Bestellhinweisvorrichtung (1) nach Anspruch 1, wobei die Bestellhinweisvorrichtung (1) ferner einen Helligkeitssensor (145) zum Messen der Umgebungshelligkeit aufweist, wobei die Bestellhinweisvorrichtung (1) ferner dazu konfiguriert ist, die Helligkeit der einen oder der mehreren ersten Lichtquellen (167) und der einen oder mehreren zweiten Lichtquellen (168) an die gemessene Umgebungshelligkeit anzupassen.

3. Bestellhinweisvorrichtung (1) nach Anspruch 1 oder 2, wobei die Bestellhinweisvorrichtung (1) ferner ein Nahfeldkommunikations-Leser zum Lesen von Information von einem Nahfeldkommunikations-Etikett aufweist.

4. Bestellhinweisvorrichtung (1) nach Anspruch 3, wobei eine Einstellung der einen oder der mehreren ersten Lichtquellen (167) und eine Einstellung der einen oder der mehreren zweiten Lichtquellen (168) von einer mit dem Nahfeldkommunikations-Leser gelesenen Information abhängt.

5. Bestellhinweisvorrichtung (1) nach einem der Ansprüche 1 bis 4, wobei das Ausgeben (490) des Alarmsignals ein Blinken des optischen Ausgabemittels (160) insbesondere der einen oder mehreren zweiten Lichtquellen (168) aufweist.

6. Bestellhinweisvorrichtung (1) nach einem der Ansprüche 1 bis 5, wobei die Bestellhinweisvorrichtung (1) ferner einen Lautsprecher (170) aufweist, wobei das Ausgeben (490) des Alarmsignals eine Audioausgabe über den Lautsprecher (170) aufweist.

7. Bestellhinweisvorrichtung (1) nach einem der Ansprüche 1 bis 6, wobei das Ausgeben (490) des Alarmsignals eine elektronische Übermittlung eines Alarmsignals über die Kommunikationsschnittstelle (180) an ein Steuergerät (3) aufweist.

8. Bestellhinweisvorrichtung (1) nach einem der Ansprüche 1 bis 7, wobei das optische Ausgabemittel (160) ferner einen Lichtleiter (161) aufweist, wobei der Lichtleiter (161) ferner im Wesentlichen in Form eines hohlen Kegelstumpfes bzw. eines sich verjüngenden Hohlzylinders ausgebildet ist.

9. Bestellhinweisvorrichtung (1) nach Anspruch 8,
wobei der Lichtleiter (161) an einem ersten Ende (162) eine oder mehrere erste Aussparungen (165) aufweist,
wobei die eine oder die mehreren ersten Lichtquellen (167) jeweils in der einen oder den mehreren ersten Aussparungen (165) angeordnet sind, und
wobei die eine oder die mehreren zweiten Lichtquellen (168) in der Bestellhinweisvorrichtung (1) weiter außen als die eine oder die mehreren ersten Lichtquellen (167) angeordnet sind.

10. Bestellhinweisvorrichtung (1) nach Anspruch 8 oder 9, wobei der Lichtleiter (161) an einem zweiten Ende (163) mindestens eine zweite Aussparung (166) zum Durchleiten von mindestens einem Kabel (111) aufweist.

11. Bestellhinweisvorrichtung (1) nach einem der Ansprüche 1 bis 10, wobei die Bestellhinweisvorrichtung (1) ferner einen Projektor aufweist, wobei der Projektor dazu eingerichtet ist, Information auf eine Stellfläche der Bestellhinweisvorrichtung (1) zu projizieren, und wobei bei der Einstellung der Helligkeit der einen oder der mehreren ersten Lichtquellen (167) und der Einstellung der Helligkeit der einen oder mehreren zweiten Lichtquellen (168) ferner die Helligkeit der projizierten Information berücksichtigt wird.

12. System mit einer Vielzahl von Bestellhinweisvorrichtungen nach einem der Ansprüche 1 bis 11 und einer entsprechenden Vielzahl von Nahfeldkommunikations-Etiketten (2), wobei die Vielzahl der Bestellhinweisvorrichtungen (1) jeweils einen Nahfeldkommunikations-Leser zum Lesen von Information von der Vielzahl von Nahfeldkommunikations-Etiketten aufweist und wobei die Vielzahl von Bestellhinweisvorrichtungen über die jeweiligen Kommunikationsschnittstellen (180) drahtlos mit einem Steuergerät (3) verbindbar sind.

13. Verfahren zum Ausgeben eines Alarmsignals bei einem Versuch einer Entwendung einer Bestellhinweisvorrichtung (1), die eine Eingabeeinrichtung (110), eine Kommunikationsschnittstelle (180), einen Bewegungsmelder (150), einen Speicher (130), eine optische Anzeigeeinrichtung (160) und eine Steuereinheit (120) aufweist, wobei die optische Anzeigeeinrichtung (160) eine oder mehrere erste Lichtquellen (167) und eine oder mehrere zweite Lichtquellen (168) aufweist,
wobei die Eingabeeinrichtung (110) konfiguriert ist, mit einer optischen Anzeigeeinrichtung (160) derart in Wirkverbindung zu stehen, dass die optischen Anzeigeeinrichtung (160) nach ihrer Aktivierung durch die Eingabeeinrichtung (110) den Betätigungsvorgang der Eingabeeinrichtung (110) mittels eines optischen Signals zu signalisieren, wobei die optische Anzeigeeinrichtung (160) dazu konfiguriert ist, nach ihrer Aktivierung ein optisches Dauersignal auszugeben, welches deaktivierbar ist, wobei eine Einrichtung zum Erfassen der Zeitdauer seit der Aktivierung des optischen Dauersignals bereitgestellt wird,
wobei die Einstellung der Helligkeit der einen oder der mehreren ersten Lichtquellen (167) und die Einstellung der Helligkeit der einen oder mehreren zweiten Lichtquellen (168) von einer Umgebungsbedingung abhängen,
wobei in dem Verfahren bei einem Versuch einer Entwendung der Bestellhinweisvorrichtung (1) die Bestellhinweisvorrichtung (1) ein Alarmsignal ausgibt (490),
wobei das Ausgeben (490) des Alarmsignals stufenweise erfolgt, wobei, wenn der Bewegungsmelder (150) länger als eine erste Schwellenwertzeitdauer ein Signal an die Steuereinheit (120) sendet (430), die Steuereinheit (120) eine erste der Stufen einleitet (450), und
wenn der Bewegungsmelder (150) länger als eine zweite Schwellenwertzeitdauer das Signal an die Steuereinheit (120) sendet (470), die Steuereinheit (120) eine zweite der Stufen einleitet (490).

## Claims

1. Order indication device (1) for use in restaurants, inns and the like, wherein the order indication device (1) comprises an input device (110) which can be actuated by a guest, a communication interface (180), a memory (130), a movement detector (150) which detects whether the order indication device (1) is moved, optical indication means (160) and a control unit (120), wherein the optical indication means (160) comprises one or more first light sources (167) and one or more second light sources (168), wherein the setting of the brightness of the one or more first light sources (167) and the setting of the brightness of the one or more second light sources (168) depend on an environmental condition,
wherein the input device (110) is operatively connected to the optical indication means (160) via the control unit (120) such that the optical indication means (160), after its activation by the input device (110), signals the actuation process of the input device (110) by means of an optical signal, wherein the optical indication means (160), after its activation, outputs a continuous optical signal which can be deactivated, wherein the order indication device (1) further includes a means for detecting the time elapsed since the activation of the continuous optical signal,
wherein the order indication device (1) is configured to output (490) an alarm signal in the event of an attempt to steal the order indication device (1),
wherein the output (490) of the alarm signal takes place in stages,
wherein, if the movement detector (150) sends (430) a signal to the control unit (120) for more than a first threshold period, the control unit (120) initiates (450) a first one of the stages, and
if the movement detector (150) sends (470) the signal to the control unit (120) for more than a second threshold period, the control unit (120) initiates (490) a second one of the stages.

2. Order indication device (1) of claim 1, wherein the order indication device (1) further comprises a brightness sensor (145) for measuring the ambient brightness, wherein the order indication device (1) is further configured to adapt the brightness of the one or more first light sources (167) and the one or more second light sources (168) to the measured ambient brightness.

3. Order indication device (1) of claim 1 or 2, wherein the order indication device (1) further comprises a near-field communication reader for reading information from a near-field communication tag.

4. Order indication device (1) of claim 3, wherein a setting of the one or more first light sources (167) and a setting of the one or more second light sources (168) depend on information read by the near-field communication reader.

5. Order indication device (1) of any one of claims 1 to 4, wherein outputting (490) the alarm signal comprises blinking the optical output means (160), in particular of the one or more second light sources (168).

6. Order indication device (1) of any one of claims 1 to 5, wherein the order indication device (1) further comprises a loudspeaker (170), wherein outputting (490) the alarm signal comprises audio output via the loudspeaker (170).

7. Order indication device (1) of any one of claims 1 to 6, wherein outputting (490) the alarm signal comprises electronic transmission of an alarm signal via the communication interface (180) to a control unit (3).

8. Order indication device (1) of any one of claims 1 to 7, wherein the optical output means (160) further comprises a light guide (161), wherein the light guide (161) is further formed substantially in the form of a hollow truncated cone or a tapering hollow cylinder.

9. Order indication device (1) of claim 8,
wherein the light guide (161) comprises one or more first recesses (165) at a first end (162),
wherein the one or more first light sources (167) are respectively arranged in the one or more first recesses (165), and
wherein the one or more second light sources (168) are arranged further outwardly than the one or more first light sources (167) in the order indication device (1).

10. Order indication device (1) of claim 8 or 9, wherein the light guide (161) comprises at least one second recess (166) at a second end (163) for passing at least one cable (111).

11. Order indication device (1) of any one of claims 1 to 10, wherein the order indication device (1) further comprises a projector, wherein the projector is configured to project information onto a surface on which the order indication device (1) is placed, and wherein the brightness of the projected information is further taken into account in the setting of the brightness of the one or more first light sources (167) and the setting of the brightness of the one or more second light sources (168).

12. System comprising a plurality of order indication devices according to any one of claims 1 to 11 and a corresponding plurality of near-field communication tags (2), wherein the plurality of order indication devices (1) each comprise a near-field communication reader for reading information from the plurality of near-field communication tags, and wherein the plurality of order indication devices can be wirelessly connected to a control unit (3) via the respective communication interfaces (180).

13. Method for outputting an alarm signal in the event of an attempt to steal an order indication device (1) which comprises an input device (110), a communication interface (180), a movement detector (150), a memory (130), an optical indication means (160) and a control unit (120), wherein the optical indication means (160) comprises one or more first light sources (167) and one or more second light sources (168),
wherein the input device (110) is configured to be operatively connected to an optical indication means (160) such that the optical indication means (160), after its activation by the input device (110), signals the actuation process of the input device (110) by means of an optical signal, wherein the optical indication means (160), after its activation, is configured to output a continuous optical signal which can be deactivated, wherein a means for detecting the time elapsed since the activation of the continuous optical signal is provided,
wherein the setting of the brightness of the one or more first light sources (167) and the setting of the brightness of the one or more second light sources (168) depend on an environmental condition,
wherein in the method, in the event of an attempt to steal the order indication device (1), the order indication device (1) outputs (490) an alarm signal,
wherein the output (490) of the alarm signal takes place in stages,
wherein, if the movement detector (150) sends (430) a signal to the control unit (120) for more than a first threshold period, the control unit (120) initiates (450) a first one of the stages, and
if the movement detector (150) sends (470) the signal to the control unit (120) for more than a second threshold period, the control unit (120) initiates (490) a second one of the stages.

## Revendications

1. Dispositif d'indication de commande (1) destiné à être utilisé dans des restaurants, des auberges et similaires, le dispositif d'indication de commande (1) présentant un dispositif d'entrée (110) pouvant être actionné par un invité, une interface de communication (180), une mémoire (130), un détecteur de mouvement (150) qui détecte si le dispositif d'indication de commande (1) est déplacé, un dispositif d'avertissement optique (160) et une unité de commande (120), le dispositif d'avertissement optique (160) présentant une ou plusieurs premières sources de lumière (167) et une ou plusieurs deuxièmes sources de lumière (168), le réglage de la luminosité de la ou des premières sources de lumière (167) et le réglage de la luminosité de la ou des deuxièmes sources de lumière (168) dépendant d'une condition environnementale,
le dispositif d'entrée (110) étant en liaison fonctionnelle par le biais de l'unité de commande (120) avec le dispositif d'avertissement optique (160) de telle sorte que le dispositif d'avertissement optique (160), après son activation par le dispositif d'entrée (110), signale l'opération d'actionnement du dispositif d'entrée (110) au moyen d'un signal optique, le dispositif d'avertissement optique (160), après son activation, émettant un signal optique permanent qui peut être désactivé, le dispositif d'indication de commande (1) comprenant un dispositif pour détecter la durée depuis l'activation du signal optique permanent,
le dispositif d'indication de commande (1) étant configuré pour émettre (490) un signal d'alarme lors d'une tentative de détournement du dispositif d'indication de commande (1),
l'émission (490) du signal d'alarme étant effectuée par étapes,
lorsque le détecteur de mouvement (150) envoie (430) un signal à l'unité de commande (120) plus longtemps qu'une première durée de seuil, l'unité de commande (120) initiant (450) une première des étapes, et
lorsque le détecteur de mouvement (150) envoie (470) le signal à l'unité de commande (120) plus longtemps qu'une deuxième durée de seuil, l'unité de commande (120) initiant (490) une deuxième des étapes.

2. Dispositif d'indication de commande (1) selon la revendication 1, le dispositif d'indication de commande (1) présentant en outre un capteur de luminosité (145) pour mesurer la luminosité environnementale, le dispositif d'indication de commande (1) étant en outre configuré pour ajuster la luminosité de la ou des premières sources de lumière (167) et de la ou des deuxièmes sources de lumière (168) à la luminosité environnementale mesurée.

3. Dispositif d'indication de commande (1) selon la revendication 1 ou 2, le dispositif d'indication de commande (1) présentant en outre un lecteur de communication en champ proche pour lire des informations à partir d'une étiquette de communication en champ proche.

4. Dispositif d'indication de commande (1) selon la revendication 3, un réglage de la ou des premières sources de lumière (167) et un réglage de la ou des deuxièmes sources de lumière (168) dépendant d'informations lues avec le lecteur de communication en champ proche.

5. Dispositif d'indication de commande (1) selon l'une quelconque des revendications 1 à 4, l'émission (490) du signal d'alarme présentant un clignotement du moyen d'émission optique (160), en particulier de la ou des deuxièmes sources de lumière (168).

6. Dispositif d'indication de commande (1) selon l'une quelconque des revendications 1 à 5, le dispositif d'indication de commande (1) présentant en outre un haut-parleur (170), l'émission (490) du signal d'alarme présentant une émission audio par le biais du haut-parleur (170).

7. Dispositif d'indication de commande (1) selon l'une quelconque des revendications 1 à 6, l'émission (490) du signal d'alarme présentant une transmission électronique d'un signal d'alarme par le biais de l'interface de communication (180) à un appareil de commande (3).

8. Dispositif d'indication de commande (1) selon l'une quelconque des revendications 1 à 7, le moyen d'émission optique (160) présentant en outre un guide de lumière (161), le guide de lumière (161) étant en outre réalisé sensiblement sous la forme d'un cône tronqué creux ou d'un cylindre creux effilé.

9. Dispositif d'indication de commande (1) selon la revendication 8,
le guide de lumière (161) présentant au niveau d'une première extrémité (162) un ou plusieurs premiers évidements (165),
la ou les premières sources de lumière (167) étant disposées respectivement dans le ou les premiers évidements (165), et
la ou les deuxièmes sources de lumière (168) étant disposées dans le dispositif d'indication de commande (1) plus à l'extérieur que la ou les premières sources de lumière (167).

10. Dispositif d'indication de commande (1) selon la revendication 8 ou 9, le guide de lumière (161) présentant au niveau d'une deuxième extrémité (163) au moins un deuxième évidement (166) pour le passage d'au moins un câble (111).

11. Dispositif d'indication de commande (1) selon l'une quelconque des revendications 1 à 10, le dispositif d'indication de commande (1) présentant en outre un projecteur, le projecteur étant conçu pour projeter des informations sur une surface de pose du dispositif d'indication de commande (1), et la luminosité des informations projetées étant en outre prise en compte lors du réglage de la luminosité de la ou des premières sources de lumière (167) et du réglage de la luminosité de la ou des deuxièmes sources de lumière (168).

12. Système présentant une pluralité de dispositifs d'indication de commande selon l'une quelconque des revendications 1 à 11 et une pluralité correspondante d'étiquettes de communication en champ proche (2), la pluralité de dispositifs d'indication de commande (1) présentant respectivement un lecteur de communication en champ proche pour lire des informations à partir de la pluralité d'étiquettes de communication en champ proche, et la pluralité de dispositifs d'indication de commande pouvant être connectés sans fil à un appareil de commande (3) par le biais des interfaces de communication respectives (180).

13. Procédé d'émission d'un signal d'alarme lors d'une tentative de détournement d'un dispositif d'indication de commande (1) qui présente un dispositif d'entrée (110), une interface de communication (180), un détecteur de mouvement (150), une mémoire (130), un dispositif d'avertissement optique (160) et une unité de commande (120), le dispositif d'avertissement optique (160) présentant une ou plusieurs premières sources de lumière (167) et une ou plusieurs deuxièmes sources de lumière (168),
le dispositif d'entrée (110) étant configuré pour être en liaison fonctionnelle avec un dispositif d'avertissement optique (160) de telle sorte que le dispositif d'avertissement optique (160), après son activation par le dispositif d'entrée (110), signale l'opération d'actionnement du dispositif d'entrée (110) au moyen d'un signal optique, le dispositif d'avertissement optique (160) étant configuré pour émettre, après son activation, un signal optique permanent qui peut être désactivé, un dispositif étant prévu pour détecter la durée depuis l'activation du signal optique permanent,
le réglage de la luminosité de la ou des premières sources de lumière (167) et le réglage de la luminosité de la ou des deuxièmes sources de lumière (168) dépendant d'une condition environnementale,
le dispositif d'indication de commande (1) émettant (490) un signal d'alarme lors d'une tentative de détournement du dispositif d'indication de commande (1),
l'émission (490) du signal d'alarme étant effectuée par étapes,
lorsque le détecteur de mouvement (150) envoie (430) un signal à l'unité de commande (120) plus longtemps qu'une première durée de seuil, l'unité de commande (120) initiant (450) une première des étapes, et
lorsque le détecteur de mouvement (150) envoie (470) le signal à l'unité de commande (120) plus longtemps qu'une deuxième durée de seuil, l'unité de commande (120) initiant (490) une deuxième des étapes.
